(19) Europäisches Patentamt
European Patent Office
Office européen des brevets

(11) Veröffentlichungsnummer: **0 285 970 B1**

(12) # EUROPÄISCHE PATENTSCHRIFT

(45) Veröffentlichungstag der Patentschrift: **10.06.92**

(51) Int. Cl.$^5$: **C08L 71/12**

(21) Anmeldenummer: **88105029.8**

(22) Anmeldetag: **29.03.88**

(54) **Thermoplastische Formmassen auf Basis von Polyphenylenether.**

(30) Priorität: **07.04.87 DE 3711620**

(43) Veröffentlichungstag der Anmeldung:
**12.10.88 Patentblatt 88/41**

(45) Bekanntmachung des Hinweises auf die Patenterteilung:
**10.06.92 Patentblatt 92/24**

(84) Benannte Vertragsstaaten:
**BE DE FR GB NL**

(56) Entgegenhaltungen:
**EP-A- 0 017 939**
**EP-A- 0 223 115**
**EP-A- 0 223 116**
**US-A- 4 097 556**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Seiler, Erhard, Dr.**
**Erpolzheimer Strasse 1**
**W-6700 Ludwigshafen(DE)**
Erfinder: **Ostermayer, Bertram, Dr.**
**Pfaffenpfad 14**
**W-6701 Roedersheim-Gronau(DE)**
Erfinder: **Walter, Hans-Michael, Dr.**
**Im Haagweg 6**
**W-6701 Ruppertsberg(DE)**
Erfinder: **Lausberg, Dietrich, Dr.**
**Nachtigalstrasse 32 a**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft thermoplastische Formmassen auf Basis von Polyphenylenether, erhätlich durch Mischen bei einer Temperatur zwischen 200 und 320 ° C während 0,5 bis 30 Minuten von im wesentlichen

A) 80 bis 99,9 Gew.-Teilen, bezogen auf die Summe der Komponenten A und B, eines modifizierten Polyphenylenethers, hergestellt durch Umsetzüng in der schmelze von

$a_1$) 70 bis 99,95 Gew.%, bezogen auf A, eines Polymeranteils, der mindestens 30 Gew.%, bezogen auf $a_1$, Polyphenylenether und höchstens 70 Gew.%, bezogen auf $a_1$, eines vinylaromatischen Polymeren enthält,

$a_2$) 0,05 bis 10 Gew.%, bezogen auf A, mindestens einen der Verbindüngen

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung

$a_{23}$) einer $\alpha,\beta$-ungesättigten Dicarbonylverbindung und

$a_3$) 0 bis 20 Gew.%, bezogen auf A, eines weiteren Comonomeren, das unter den Herstellungsbedingungen mit $a_1$ reagieren kann,

und

B) 0,1 bis 20 Gew.-Teilen, bezogen auf die Summe der Komponenten A und B,

- Poly-$\epsilon$-caprolacton mit einem Gewichtsmittel des Molekulargewichts von 400 bis 100000 g/mol und/oder
- eines Polymeren der Struktur

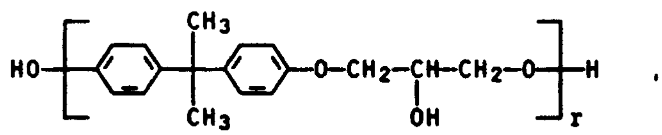

wobei r so gewählt ist, das das Gewichtsmittel des Molekulargewichts zwischen 400 und 100000 g/mol liegt,

wobei die Summe der Komponenten aus A und B 100 Gew.-Teile ergibt.

Weiterhin betrifft diese Erfindung die Herstellung dieser Formmassen und deren Verwendung als Haftvermittler oder zur Herstellung von Formkörpern durch Spritzguß oder Extrusion.

Bei derartigen Formmassen handelt es sich um hochmolekulare modifizierte Polyphenylenether A, deren aufgepfropfte Seitenketten aus carbonylgruppenhaltigen Verbindungen zumindest teilweise mit den hydroxylgruppenhaltigen Polymeren B umgesetzt sind.

Mit Maleinsäureanhydrid gepfropfte Polymerisate wie Polyethylen, Polypropylen, Polystyrol, Butadienpolymerisate, Ethylen-Propylencopolymerisate etc. sind bekannt (vgl. B.C. Trivedi und B.M. Culbertson in der Publikation "Maleic Anhydride", Chapter 11, Seiten 459 bis 478, Plenum Press, New York (1982)).

Auch Polyphenylenether, die mit Maleinsäureanhydrid oder Fumarsäure gepfropft sind, sind in der Literatur beschrieben (vgl. DE-A 30 44 803, die US-Patente 4 338 410, 4 097 556 sowie 4 283 511 bzw. DE-A 35 40 118).

Nachteilig bei den bekannten Produkten ist die geringe Wärmestabilität, Spannungsrißbeständigkeit und Beständigkeit gegen Licht und UV-Strahlen.

Der vorliegenden Erfindung lag daher die Aufgabe zugrunde, auf Basis von Polyphenylenether thermoplastische Formmassen bereitzustellen, die die geschilderten Nachteile vermeiden, einfach herzustellen sind und zu Formkörpern mit guten mechanischen Eigenschaften verarbeitet werden können.

Diese Aufgabe wurde erfindungsgemäß gelöst durch die eingangs definierten thermoplastischen Formmassen.

Außerdem wurden spezielle Ausgestaltungen der Formmassen gemäß der Unteransprüche, ein Verfahren zur Herstellung der Formmassen und deren Verwendung gefunden.

Im folgenden werden die Formmassen im Einzelnen beschrieben.

Als Komponente A enthalten die erfindungsgemäßen Formmassen 80 bis 99,9, vorzugsweise 95 bis 99,6, insbesondere 97 bis 99,6 Gew.-Teile, bezogen auf 100 Gew.-Teile der Summe der Komponenten A und B, mindestens eines modifizierten Polyphenylenethers, der unter Verwendung der Komponenten $a_1$, $a_2$ und gegebenenfalls $a_3$ hergestellt wird.

Bei der Komponente $a_1$ handelt es sich um einen Polymeranteil, der mindestens 30, bevorzugt mehr als 50, insbesondere mehr als 80 Gew.%, bezogen auf $a_1$, Polyphenylenether und höchstens 70, bevorzugt weniger als 50, insbesondere weniger als 20 Gew.%, bezogen auf $a_1$, eines vinylaromatischen Polymeren

enthält.

Die in Frage kommenden Polyphenylenether sind an sich bekannt, sie werden nach üblichen Verfahren aus in ortho-Position durch Alkylgruppen, Alkoxygruppen, Chlor oder Brom disubstituierten Phenolen, durch oxidative Kopplung hergestellt (vgl. US-Patent 3 661 848, 3 219 635, 3 378 505, 3 306 874, 3 306 875 und 3 639 656). Die Alkyl- oder Alkoxygruppen, die bevorzugt 1 bis 4 C-Atome, aber kein $\alpha$-ständiges tertiäres Wasserstoffatom enthalten, können auch ihrerseits durch Chlor oder Brom substituiert sein. Die Polyphenylenether sind bevorzugt mit vinylaromatischen Polymerisaten verträglich.

Polymere gelten als miteinander verträglich, wenn sie weitgehend oder ganz ineinander löslich sind (vgl. A. Noshay, "Block Copolymers", Academic Press (1977), Seiten 8 bis 10; sowie O. Olabisi, "Polymer-Polymer Miscibility", Academic Press (1979), Seiten 117 bis 189.

Verträgliche Polyphenylenether sind beispielsweise Poly(2,6-diethyl-1,4-phenylen)ether, Poly-(2-methyl-6-ethyl-1,4-phenylen)ether, Poly-(2-methyl-6-propyl-1,4-phenylen)ether, Poly-(2,6-dipropyl-1,4-phenylen)-ether, Poly-(2-ethyl-6-propyl-1,4-phenylen)ether oder Copolymere, wie solche, die 2,3,6-Trimethylphenol enthalten, außerdem Polymermischungen. Besonders bevorzugt ist jedoch Poly-(2,6-dimethyl-1,4-phenylen)-ether.

Die Polyphenylenether sind im allgemeinen hochmolekular. Sie weisen im allgemeinen eine relative Viskosität von 0,3 bis 0,8 dl/g, gemessen in 1-gew.%iger Lösung in Chloroform bei 25°C auf.

Das vinylaromatische Polymere ist vorzugsweise mit dem eingesetzten Polyphenylenether verträglich.

Beispiele für bevorzugte, mit Polyphenylenether verträgliche vinylaromatische Polymere sind der bereits erwähnten Monographie von Olabisi, S. 224 bis 230 und 245 zu entnehmen. Nur stellvertretend seien hier Polymere aus überwiegend vinylaromatischen Monomeren, insbesondere Styrol, ferner kern- oder seitenalkylierten Styrolen mit $C_1$-$C_4$-Alkylresten, insbesondere Methyl, genannt, wobei in untergeordneten Mengen (vorzugsweise nicht mehr als 20, insbesondere nicht mehr als 8 Gew.%, bezogen auf die Polymeren) auch Comonomere wie (Meth)acrylnitril oder (Meth)acrylsäureester am Aufbau beteiligt sein können. Insbesondere werden an sich bekannte Styrolhomo- oder Copolymerisate bevorzugt. Die Homo- und Copolymerisate werden dabei nach bekannten Verfahren in Masse, Lösung oder Suspension hergestellt (vgl. Ullmanns Enzyclopädie der Technischen Chemie, Band 19, Seiten 265 bis 272, Verlag Chemie, Weinheim 1980). Sie weisen im allgemeinen einen Schmelzindex (MFI (200°C/5 kg), gemessen nach DIN 53 735) von 1 bis 30, insbesondere von 15 bis 25 g/10 min auf.

Der Anteil der Komponente $a_1$ an der Komponente A liegt im Bereich von 70 bis 99,95, vorzugsweise 82 bis 99,9 und insbesondere 95 bis 99,5 Gew.%, bezogen auf A.

Als wesentliche Komponente $a_2$ enthält der modifizierte Polyphenylenether A mindestens eine der Verbindungen $a_{21}$ bis $a_{23}$. Prinzipiell können auch Mischungen verschiedener Verbindungen $a_{21}$ bis $a_{23}$ eingesetzt werden, doch ist im allgemeinen die Verwendung nur einer dieser Verbindungsarten vorteilhaft. Bevorzugt wird die Komponente $a_{23}$ eingesetzt.

Der Anteil der Komponente $a_2$ beträgt 0,05 bis 10, vorzugsweise 0,1 bis 8, insbesondere 0,5 bis 5 Gew.%, bezogen auf die Komponente A.

Als Komponente $a_2$ sind mindestens eine Amidgruppe enthaltende Monomere mit mindestens einer polymerisierbaren Doppelbindung ($a_{21}$) geeignet, vorzugsweise solche der allgemeinen Formeln I oder II

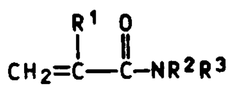

(I)

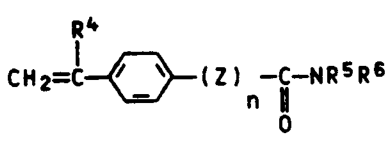

(II) ,

wobei $R^1$, $R^2$, $R^3$, $R^4$, $R^5$ und $R^6$ Wasserstoff, Alkyl- oder Cycloalkylgruppen mit bis zu 12 C-Atomen oder Arylgruppen und Z Alkylengruppen mit 1 bis 12 C-Atomen darstellen und n den Wert 0 oder 1, vorzugsweise 0 hat.

Bevorzugte Substituenten $R^1$, $R^2$, $R^3$, $R^4$, $R^5$ und $R^6$ sind Wasserstoff, Alkylgruppen mit 1 bis 10 C-Atomen, Cycloalkylgruppen mit bis zu 8 C-Atomen oder Arylgruppen, z.B. Phenyl. $R^1$ und $R^4$ sind insbesondere H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie

deren Mischungen genannt. Bevorzugt werden Acrylamid, Methacrylamid, N-Phenylacrylamid und N-Phenylmethacrylamid verwendet.

Als Komponente $a_2$ kann auch ein mindestens eine Lactam-Gruppe enthaltendes Monomer mit einer polymerisierbaren Doppelbindung ($a_{22}$) eingesetzt werden. Vorzugsweise werden Lactame der allgemeinen Struktur III

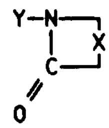 (III)

eingesetzt, wobei X eine lineare verzweigte Alkylengruppe mit 2 bis 15 C-Atomen darstellt und Y die allgemeine Formel

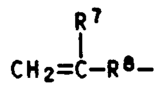

hat, wobei $R^7$ ein Wasserstoffatom, eine Alkyl- oder Alkoxygruppe mit 1 bis 4 C-Atomen und $R^8$ einen zweibindigen Substituenten

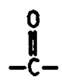

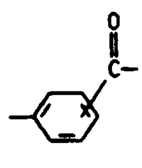 oder

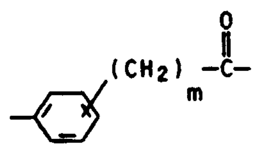 ,

wobei m eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen, insbesondere der Acryloyl- und Methacryloylrest.

Bevorzugt sind Lactameinheiten, die zu Polyamiden polymerisierbar oder copolymerisierbar sind, wie dies in Houben-Weyl, Methoden der organ. Chemie, Band XI/2, S. 511 bis 587, (1958) und Band XIV/2, S. 111 bis 131, (1963) beschrieben wird. Beispielsweise seien $\beta$-Propiolactame wie 3,3'-Dimethyl-3-propiolactam, genannt. Ebenfalls bevorzugte Lactam-Einheiten sind Pyrrolidon und $\epsilon$-Caprolactam, außerdem 7-Önantholactam, 8-Capryllactam und 12-Laurinlactam, wie sie bei K. Dachs, Angewandte Chemie, 74, 540 bis 545, (1962) beschrieben werden. Es können auch Mischungen dieser Verbindungen eingesetzt werden.

Als besonders bevorzugtes Beispiel einer Komponente $a_{22}$ sei hier nur N-(Meth)acryloyl-$\epsilon$-caprolactam

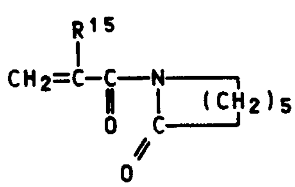

genannt,
wobei $R^{15}$ ein Wasserstoffatom oder eine Methylgruppe sein kann.

Bei der Komponente $a_{23}$ handelt es sich um $\alpha,\beta$-ungesättigte Dicarbonylverbindungen, bevorzugt solche der allgemeinen Formel IV

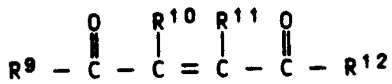

IV,

wobei

- $R^9$ und $R^{12}$ Hydroxylgruppen, Aroxy-, Alkoxy-, Aralkoxy- oder Cycloalkoxygruppen mit bis zu 12 C-Atomen, $-NR^{13}R^{14}$ oder gemeinsam -O-oder $-NR^{13}-$,
- $R^{10}$ und $R^{11}$ Wasserstoff oder, wenn $R^{10}$ oder $R^{11}$ Wasserstoff ist, eine Alkyl- oder Cycloalkylgruppe mit bis zu 12 C-Atomen, eine Arylgruppe, Chlor, oder gemeinsam eine Alkylengruppe mit 4 C-Atomen,
- $R^{13}$ und $R^{14}$ Wasserstoff, Alkyl-, Cycloalkyl-, Aralkyl- oder Arylgruppen mit bis zu 12 C-Atomen, die ihrerseits durch $C_1$-$C_4$-Alkyl- oder Alkoxygruppen substituiert sein können, darstellen.

Die Substituenten müssen, was sich allerdings von selbst versteht, so beschaffen sein, daß sie die Modifizierungsreaktion nicht verhindern. Es handelt sich daher im allgemeinen um $\alpha,\beta$-ungesättigte Dicarbonsäuren, deren Anhydride, Imide, um Monoester oder Monoamide dieser Dicarbonsäuren, ihre Diester oder Diamide.

Als Beispiele für Dicarbonsäuren seien Maleinsäure, Fumarsäure, Methylmaleinsäure, Butenylbernsteinsäure, Tetrahydrophthalsäure und Chlormaleinsäure genannt, von denen Fumarsäure besonders bevorzugt wird.

Als Anhydride seien beispielhaft erwähnt Maleinsäureanhydrid, Methylmaleinsäureanhydrid und Chlormaleinsäureanhydrid.

Bevorzugte Imide leiten sich von der Maleinsäure ab. Die Substituenten $R^{10}$, $R^{11}$ und $R^{13}$ sind dabei Alkylgruppen mit 1 bis 4 C-Atomen, beispielsweise Methyl-, Ethyl- oder n-, i- oder t-Butyl, Cycloakylgruppen mit bis zu 8 C-Atomen oder Phenylgruppen, wobei $R^{13}$ durch $C_1$-$C_4$-Alkylgruppen substituiert sein kann. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Bevorzugte Halbester und Halbamide leiten sich von der Maleinsäure ab.

Die Halbester leiten sich bevorzugt von primären und sekundären Monoalkoholen, wie Methanol, Ethanol, n- und i-Propanol, n- und i-Butanol, Pentanole, Hexanole, Heptanole, Octanole, z.B. 2-Ethylhexylalkohol und von höheren Alkoholen wie Dodecanolen und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen. Als Amine zur Herstellung der erfindungsgemäß eingesetzten Halbamide seien ganz allgemein sekundäre Amine und N-Alkylaniline genannt. Beispiele hierfür sind N-Methyl- oder N-Ethylalkylamine oder N-Methylanilin. Ganz allgemein werden Halbester den Halbamiden vorgezogen.

Formmassen, die als Komponente $a_{23}$ einen Halbester oder ein Halbamid der Maleinsäure enthalten, weisen häufig besonders gute Fließeigenschaften, d.h. besonders hohe Schmelzindex-Werte (MFI) auf.

Als $a_3$ kommen weitere, bevorzugt nicht vinylaromatische Comonomere in Frage, die unter den Herstellungsbedingungen mit der Komponente $a_1$ reagieren bzw. auf diese aufpfropfen. Beispielsweise seien hier Acrylsäure, Methacrylsäure, Acrylate und Methacrylate genannt, um nur einige aufzuführen. Der Anteil der Komponente $a_3$ beträgt 0 bis 20, vorzugsweise 0 bis 10 Gew.%, bezogen auf die Komponente A, besonders bevorzugt werden jedoch Formmassen, bei deren Herstellung keine dieser weiteren Comonomeren verwendet wurden.

Bei der Herstellung der modifizierten Polyphenylenether A können bis zu 20 Gew.%, bezogen auf A, an Radikalstartern eingesetzt werden.

Der Anteil der Radikalstarter ist in der Regel geringer als die Summe der verwendeten monomeren Verbindungen $a_2$. Im allgemeinen handelt es sich dabei um ein organisches Peroxid oder eine Azo-Verbindung. Verwendet werden z.B. organische Peroxide mit einer Halbwertzeit im Bereich von 0,1 bis 3000 s bei 200 °C. Die Wahl des Radikalstarters richtet sich nach der gewünschten Reaktionstemperatur.

Beispielsweise seien als Radikalstarter tert.-Butylperoxid und Dicumylperoxid genannt.

Häufig, insbesondere bei Temperaturen über 265 °C, hat es sich als vorteilhaft erwiesen, ohne Zugabe von Radikalstartern, d.h. in Abwesenheit oder praktischer Abwesenheit von Radikalstartern zu arbeiten. Dies gilt insbesondere dann, wenn als Komponente $a_2$ Fumarsäure eingesetzt wird.

Zur Herstellung des modifizierten Polyphenylenethers A werden die eingesetzten Komponenten in der Schmelze, üblicherweise bei 250 bis 350 °C, vorzugsweise 265 bis 295 °C, miteinander umgesetzt. Hierzu eignen sich besonders Extruder, da in diesen im allgemeinen auch eine gute Durchmischung der Komponenten erzielt wird. Die mittleren Verweilzeiten liegen im allgemeinen im Bereich von 0,5 bis 30 min. Besonders gut eignen sich Zweischneckenextruder.

Prinzipiell ist die Herstellung des modifizierten Polyphenylenethers auch in jedem Reaktionsgefäß, welches eine Reaktion der Komponenten miteinander ermöglicht, durchführbar.

Unter "Modifizierung des Polyphenylenethers" wird das Aufpfropfen zumindest eines Teils der carbonylgruppenhaltigen Verbindungen $a_2$ auf $a_1$ verstanden.

In den erfindungsgemäßen Formmassen werden weiterhin 0,1 bis 20, bevorzugt 0,4 bis 5, insbesondere 0,4 bis 3 Gew.-Teile, bezogen auf die Summe von A und B, der Komponente B eingesetzt.

Dabei kann es sich um ein an sich bekanntes Poly-$\epsilon$-caprolacton mit einem Gewichtsmittel des Molekulargewichts von 400 bis 100000, bevorzugt 550 bis 60000 g/mol handeln. Diese Polyester werden in bekannter Weise durch ringöffnende Polymerisation hergestellt, wobei eine bifunktionelle Verbindung, z.B. ein Diol, zugegen sein kann, um Polymere der Struktur

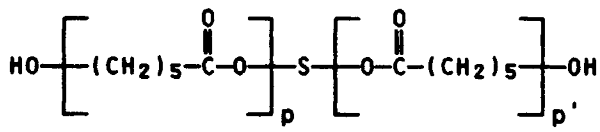

zu erzeugen. S kann beispielsweise $-(CH_2)_n-$ mit n = 2 bis 10 sein. Die Kettenlängen p und p′ sind so groß, daß das Polymere ein Molekulargewicht in dem oben genannten Bereich hat. Besonders gute Erfolge werden mit CAPA® Polycaprolactonen (®: eingetragenes Warenzeichen der Fa. Solvay-Interox) erzielt.

Als Komponente B kann ebenfalls ein an sich bekanntes Polymeres der Struktur

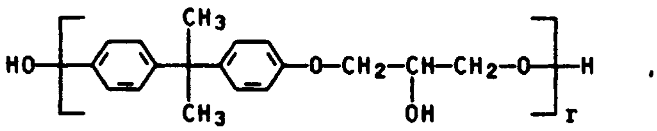

wobei r so gewählt ist, daß das Gewichtsmittel des Molekulargewichtes zwischen 400 und 100000, bevorzugt zwischen 500 und 50000 g/mol liegt, eingesetzt werden. Diese Polymeren sind in bekannter Weise durch Umsetzung von Bisphenol-A mit Epichlorhydrin herstellbar und im Handel erhältlich.

Weiterhin können als Komponente B auch Mischungen der genannten Verbindungen verwendet werden.

Als Komponente C kann in den erfindungsgemäßen Formmassen zusätzlich ein nichtmodifizierter Polyphenylenether eingemischt sein. Dieser entspricht bevorzugt dem in Komponente $a_1$ eingesetzten Polyphenylenether, weshalb hier auf die dortigen Ausführungen zu geeigneten Verbindungen verwiesen wird. Der Anteil der Komponente ist in weiten Bereichen unkritisch und kann vom 0,1fachen bis zum 20fachen, bevorzugt bis zum 5fachen, insbesondere bis zum 2fachen der Summe der Gewichtsmenge betragen, in der die Komponenten A und B in der erfindungsgemäßen Formmasse vorliegen.

In einigen Fällen hat es sich als vorteilhaft herausgestellt, wenn die Formmassen zusätzlich vinylaromatische Polymere D enthalten. Geeignet als D sind solche Polymere, wie sie bereits in Komponente $a_1$ beschrieben wurden. Für nähere Einzelheiten sei deshalb auf die Ausführungen zur Komponente $a_1$ verwiesen.

In einer bevorzugten Ausführungsform ist die Komponente D schlagzäh modifiziert. Solche Polymere sind dem Fachmann als schlagzähes Polystyrol (HIPS) bekannt. Dabei werden die vinylaromatischen Polymeren in Gegenwart eines kautschukartigen Polymeren hergestellt. Als kautschukartige Polymere seien beispielsweise genannt Polybutadien- und Polyisopren-Kautschuk. Die üblicherweise zur Herstellung schlagzähmodifizierter Styrolpolymerisate angewandten Verfahren sind die Polymerisation in Masse oder Lösung, wie beispielsweise in der US-Patentschrift 2 694 692 beschrieben. Die schlagzäh modifizierten Styrolpolymerisate (HIPS) weisen im allgemeinen einen Schmelzindex (MFI (200 °C/5 kg), gemessen nach DIN 53

735) von 2 bis 30, insbesondere von 2,5 bis 20 g/10 min auf.

Der Anteil an D kann vom 0,1fachen bis zum 4,0fachen, bevorzugt bis zum 2,0fachen der Gewichtsmenge der Summe der in der Formmasse vorliegenden Komponenten A und, falls vorhanden, C betragen.

Darüber hinaus können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 50, insbesondere nicht mehr als 35 Gew.-Teile, bezogen auf 100 Gew.-Teile der Summe aus A, B und, falls vorhanden, C.

In Frage kommen Kautschuke, die von den bisher genannten verschieden sind, wie Butadien-, Styrolbutadien-, hydrierte Styrolbutadien-, Acrylnitrilbutadien-, Buten-, gegebenenfalls styrolgepfropfte Ethylenpropylen- oder Ethylenkautschuke oder insbesondere Styrol-Butadien-Blockcopolymere, die hydriert oder teilhydriert sein können. Daneben kommen bekannte und bewährte Stabilisatoren, wie Phosphorverbindungen oder sterisch gehinderte Phenole oder Amine in Betracht, die in üblichen Mengen eingesetzt werden. Weiterhin seien genannt übliche Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum, Kreide, ferner Flammschutzmittel z.B. bromierte oder chlorierte organische Verbindungen, gegebenenfalls in Mischung mit Antimon-Verbindungen, oder phosphorhaltige Verbindungen.

Die Herstellung der erfindungsgemäßen thermoplastischen Formmassen erfolgt zweckmäßigerweise durch Mischen der Komponenten bei Temperaturen im Bereich von 200 bis 320 °C, vorzugsweise 250 bis 300 °C in üblichen Mischvorrichtungen, wie z.B. Knetern, Banburymischern und Einschneckenextrudern, vorzugsweise in einem Zweischneckenextruder, da in diesen im allgemeinen auch eine gute Durchmischung der Komponenten erzielt wird. Die mittleren Verweilzeiten beim Mischen liegen im Bereich von 0,5 bis 30 min, vorzugsweise von 1 bis 5 min.

Besonders gut eignen sich Zweischneckenextruder. Die Komponenten werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem, rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Aus den erfindungsgemäßen Formmassen lassen sich durch Spritzgießen oder Extrusion Formkörper mit vorteilhaften Eigenschaften herstellen.

Die Formmassen sind darüber hinaus als Haftmittler einsetzbar. Sie eignen sich auch als Werkstoffe, Folien, dünne Haftschichten, Schmelzkleber und Beschichtungen.

Die erfindungsgemäßen thermoplastischen Formmassen zeichnen sich durch eine gute Verarbeitbarkeit und Wärmestabilität, Spannungsrißbeständigkeit und Beständigkeit gegen Licht und UV-Strahlen aus. Weitere Vorteile liegen in den guten mechanischen Eigenschaften der Formmasse und der daraus hergestellten Formkörper.

Zur Ausführung von Beispielen und Vergleichsversuchen wurden folgende Komponenten verwendet:

Komponente A

A(1): 9,25 kg Poly-2,6-dimethyl-1,4-phenylenether mit einer relativen Viskosität von 0,61 (gemessen in 1 gew.%iger Lösung in $CHCl_3$ bei 25 °C), 0,5 kg Polystyrol (PS 144 C mit einem MFI von 24 g/10 Min bei 200 °C und 5 kg Belastung) und 0,25 kg Maleinsäuremonoethylester wurden in einem Zweischneckenextruder (ZSK 53; Werner & Pfleiderer) bei 280 °C unter Kneten vermischt und umgesetzt. Die mittlere Verweilzeit im Extruder betrug 3 min. Die austretende Schmelze wurde durch ein Wasserbad geleitet, granuliert und getrocknet.

A(2): 9,37 kg des in A(1) verwendeten PPE wurden mit 0,5 kg des in A(1) verwendeten Polystyrols und 0,13 kg Fumarsäure wie bei A(1) umgesetzt.

Komponente B

B(1): Poly-ε-caprolacton mit einem Gewichtsmittel des Molekulargewichts von 2000 g/mol (CAPA® 240 der Firma Solvay-Interox).

B(2): Polymeres aus Bisphenol A und Epichlorhydrin der Struktur

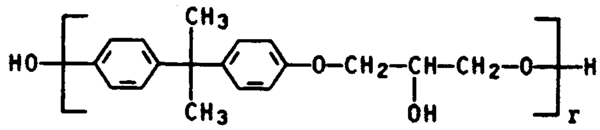

mit einem Gewichtsmittel des Molekulargewichtes von 20000 g/mol (Phenoxy® der Fa. Union Carbide Corp.)

Komponente C

Poly-2,6-dimethyl-1,4-phenylen-ether mit einer relativen Viskosität von 0,61 (gemessen in 1 gew.%iger Lösung in $CHCl_3$ bei 25 ° C).

Komponente D

hochschlagzähes Polystyrol (HIPS) mit einem Gehalt von 8 Gew.% Butadien und einem Schmelzindex (200 ° C/5,0 kg) von 15 g/10 min (Buna®CB NX 529 C, (® = eingetragenes Warenzeichen der Firma Bayer).

Zusätze

Z(1): Trisnonylphenylphosphit
Z(2): Polyethylenwachs (A-Wachs® der BASF AG)

Beispiele 1 bis 3 und Vergleichsversuche 1* bis 5*

In der folgenden Tabelle 1 sind Beispiele und Vergleichsversuche von thermoplastischen Formmassen aufgeführt.

Die angegebenen Komponenten wurden in einen Zweischneckenextruder (ZSK 53; Werner 6 Pfleiderer) dosiert, in einem ersten Teil unter Verwendung von Knetelementen bei 280 ° C aufgeschmolzen, in einem zweiten Teil unter Kneten und Verwendung von Knetelementen bei 280 ° C umgesetzt und anschließend in einer Entgasungszone bei 280 ° C umgesetzt und anschließend in einer Entgasungszone bei 280 ° C durch Anlegen von Vakuum entgast. Die mittlere Verweilzeit im Extruder betrug 3 min. Die austretende Schmelze wurde durch ein Wasserbad geleitet, granuliert und getrocknet.

Zur Ermittlung der Wärmestabilität diente die Durchstoßarbeit, die an 2 mm dicken Rundscheiben vor und nach Wärmelagerung nach DIN 53 443 gemessen wurde. Die Proben wurden 21 Tage bei 100 ° C im Trockenschrank gelagert.

Tabelle 1

| Beispiel | Vergleichsversuch | Komponenten, Mengenangabe in kg (A1) | A(2) | B(1) | B(2) | C | D | Durchstoßarbeit [Nm] vor Wärmelagerung | nach Wärmelagerung |
|---|---|---|---|---|---|---|---|---|---|
| 1 | | 6,95 | | 0,05 | | | 2,85 1) | 44 | 31 |
| | 1* | 7,0 | | | | | 2,85 1) | 37 | 20 |
| | 2* | | | | 0,05 | 6,95 | 2,85 1) | 31 | 15 |
| | 3* | | | | | 7,0 | 2,85 1) | 35 | 18 |
| 2 | | | 6,93 | 0,07 | | | 2,85 1) | 43 | 36 |
| | 4* | | 7,0 | | | | 2,85 1) | 37 | 22 |
| | 5* | | | 0,07 | | 6,93 | 2,85 1) | 34 | 16 |
| 3 | | | 6,90 | | 0,1 | | 2,85 1) | 40 | 32 |

1) zusätzlich 0,3 kg Z(1) und 1,2 kg Z(2)

## Patentansprüche

1. Thermoplastische Formmassen auf Basis von Polyphenylenether, erhältlich durch Mischen bei einer Temperatur zwischen 200 und 320 °C und einer Verweilzeit zwischen 0,5 und 30 Minuten von im wesentlichen

   A) 80 bis 99,9 Gew.-Teilen, bezogen auf die Summe der Komponenten A und B eines modifizierten Polyphenylenethers, hergestellt dürch Umsetzüng in der schmelze von

      $a_1$) 70 bis 99,95 Gew.%, bezogen auf A, eines Polymeranteils, der mindestens 30 Gew.%, bezogen auf $a_1$, Polyphenylenether und höchstens 70 Gew.%, bezogen auf $a_1$, eines vinylaromatischen Polymeren enthält,

      $a_2$) 0,05 bis 10 Gew.%, bezogen auf A, mindestens einen der Verbindüngen

         $a_{21}$) eines amidgruppenhaltigen Monomeren mit einer polymerisierbaren Doppelbindung,

         $a_{22}$) eines lactamgruppenhaltigen Monomeren mit einer polymerisierbaren Doppelbindung

         $a_{23}$) einer $\alpha,\beta$-ungesättigten Dicarbonylverbindung und

      $a_3$) 0 bis 20 Gew.%, bezogen auf A, eines weiteren Comonomeren, das unter den Herstellungsbedingungen mit $a_1$ reagieren kann,

   und

   B) 0,1 bis 20 Gew.-Teilen, bezogen auf die Summe der Komponenten A und B

      - Poly-$\epsilon$-caprolacton mit einem Gewichtsmittel des Molekulargewichts von 400 bis 100000 g/mol und/oder
      - eines Polymeren der Struktur

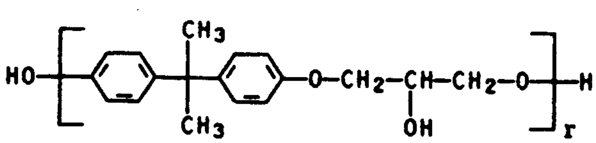

,

wobei r so gewählt ist, das das Gewichtsmittel des Molekulargewichts zwischen 400 und 100000 g/mol liegt,

wobei die Summe der Komponenten aus A und B 100 Gew.-Teile ergibt.

2. Thermoplastische Formmassen nach Anspruch 1, dadurch gekennzeichnet, daß die Komponente $a_{21}$ eine Verbindung der allgemeinen Formel I oder II ist

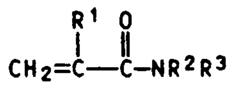

(I)

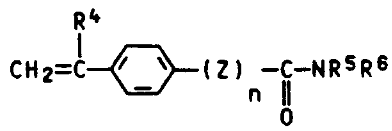

(II) ,

wobei $R^1$, $R^2$, $R^3$, $R^4$, $R^5$ und $R^6$ Wasserstoff, Alkyl- oder Cycloalkylgruppen mit bis zu 12 C-Atomen oder Arylgruppen und Z Alkylengruppen mit 1 bis 12 C-Atomen darstellen und n den Wert 0 oder 1 hat.

3. Thermoplastische Formmassen nach den Ansprüchen 1 bis 2, dadurch gekennzeichnet, daß die Komponente $a_{22}$ eine Verbindung der allgemeinen Formel III ist

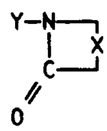

(III),

wobei X eine lineare oder verzweigte Alkylengruppe mit 2 bis 15 C-Atomen darstellt und Y die allgemeine Formel

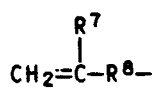

hat, wobei $R^7$ Wasserstoff, eine Alkyl- oder Alkoxygruppe mit 1 bis 4 C-Atomen und $R^8$ einen der nachstehenden zweiwertigen Reste

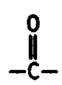

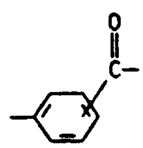

oder

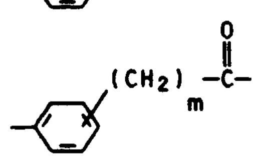

,

wobei m eine ganze Zahl von 1 bis 4 ist, darstellen.

4. Thermoplastische Formmassen nach den Ansprüchen 1 bis 3, dadurch gekennzeichnet, daß die Komponente $a_{23}$ eine Verbindung der allgemeinen Formel IV ist

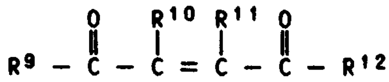 IV,

wobei

- $R^9$ und $R^{12}$ Hydroxylgruppen, Aroxy-, Alkoxy-, Aralkoxy- oder Cycloalkoxygruppen mit bis zu 12 C-Atomen, $-NR^{13}R^{14}$ oder gemeinsam -O-oder $-NR^{13}-$,
- $R^{10}$ und $R^{11}$ Wasserstoff oder, wenn $R^{10}$ oder $R^{11}$ Wasserstoff ist, Chlor, eine Alkyl- oder Cycloalkylgruppe mit bis zu 12 C-Atomen oder eine Arylgruppe, oder gemeinsam eine Alkylengruppe mit 4 C-Atomen,
- $R^{13}$ und $R^{14}$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können, darstellen.

**5.** Verfahren zur Herstellung der Formmassen nach einem der Ansprüche 1 bis 4 durch Mischen der Komponenten A und B, dadurch gekennzeichnet, daß man bei einer Temperatur zwischen 200 und 320°C während 0,5 bis 30 Minuten arbeitet.

**6.** Verwendung der thermoplastischen Formmassen nach den Ansprüchen 1 bis 5 als Haftvermittler oder zur Herstellung von Formkörpern durch Spritzguß oder Extrusion.

## Claims

**1.** A thermoplastic molding material based on polyphenylene ether, obtainable by mixing, at from 200 to 320°C for from 0.5 to 30 minutes, essentially

A) from 80 to 99.9 parts by weight, based on the sum of components A and B, of a modified polyphenylene ether prepared by reacting in the melt

$a_1$) from 70 to 99.95% by weight, based on A, of a polymer which contains not less than 30% by weight, based on $a_1$, of a polyphenylene ether and not more than 70% by weight, based on $a_1$, of a vinylaromatic polymer,

$a_2$) from 0.05 to 10% by weight, based on A, of one or more of the compounds

$a_{21}$) an amido-containing monomer having a polymerizable double bond,

$a_{22}$) a lactam-containing monomer having a polymerizable double bond,

$a_{23}$) an $\alpha,\beta$-unsaturated dicarbonyl compound and

$a_3$) from 0 to 20% by weight, based on A, of a further comonomer which is capable of reacting with $a_1$, under preparation conditions

and

B) from 0.1 to 20 parts by weight, based on the sum of components A and B,
poly-$\epsilon$-caprolactone having a weight average molecular weight of from 400 to 100,000 g/mol and/or a polymer having the structure

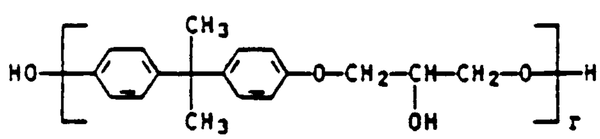

where r is chosen so that the weight average molecular weight is from 400 to 100,000 g/mol,
the sum of components A and B being 100 parts by weight.

**2.** A thermoplastic molding material as claimed in claim 1, wherein component $a_{21}$ is a compound of the formula I or II

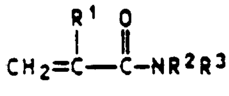

(I)

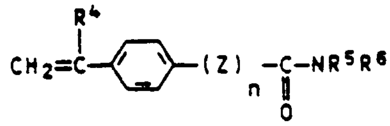

(II) .

where $R^1$, $R^2$, $R^3$, $R^4$, $R^5$ and $R^6$ are each hydrogen, an alkyl or cycloalkyl group of not more than 12 carbon atoms or aryl, Z is alkylene of 1 to 12 carbon atoms and n is 0 or 1.

**3.** A thermoplastic molding material as claimed in claim 1 or 2, wherein component $a_{22}$ is a compound of the formula III

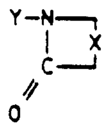

(III)

where X is linear or branched alkylene of 2 to 15 carbon atoms and Y is of the formula

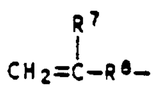

where $R^7$ is hydrogen or an alkyl or alkoxy group of 1 to 4 carbon atoms and $R^8$ is one of the following divalent radicals

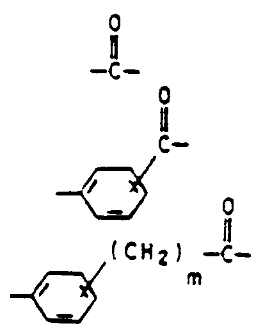

or

where m is an integer from 1 to 4.

**4.** A thermoplastic molding material as claimed in claim 1 or 2 or 3, wherein component $a_{23}$ is a compound of the formula IV

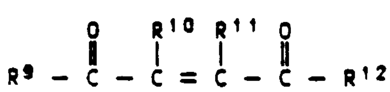

IV

where
$R^9$ and $R^{12}$ are each hydroxyl, an aryloxy, alkoxy, aralkoxy or cycloalkoxy group of not more than 12 carbon atoms or $-NR^{13}R^{14}$ or together form -O- or $-NR^{13}-$,

$R^{10}$ and $R^{11}$ are each hydrogen or, if $R^{10}$ or $R^{11}$ is hydrogen, are each chlorine, an alkyl or cycloalkyl group of not more than 12 carbon atoms or aryl or together form alkylene of 4 carbon atoms and
$R^{13}$ and $R^{14}$ are each hydrogen or an alkyl, cycloalkyl, aralkyl or aryl group of not more than 12 carbon atoms which in turn may be substituted by $C_1$-$C_4$-alkyl or $C_1$-$C_4$-alkoxy.

**5.** A process for the preparation of a thermoplastic molding material as claimed in claim 1 or 2 or 3 or 4 by mixing components A and B, wherein the process is carried out at from 200 to 320 °C in the course of from 0.5 to 30 minutes.

**6.** Use of a thermoplastic molding material as claimed in claim 1 or 2 or 3 or 4 or 5 as an adhesion promoter or for the production of moldings by injection molding or extrusion.

**Revendications**

**1.** Masses à mouler thermoplastiques à base de poly(oxyphénylène), pouvant être obtenues en mélangeant essentiellement, à une température de 200 à 320 °C pendant 0,5 à 30 mn,

A) de 80 à 99,9 parties en poids, par rapport à la somme des composants A et B, d'un poly(oxyphénylène) modifié, préparé par réaction dans la masse fondue de

$a_1$) 70 à 99,95% en poids, par rapport à A, d'un constituant polymère qui contient au moins 30% en poids, par rapport à $a_1$, de poly(oxyphénylène) et au maximum 70% en poids, par rapport à $a_1$, d'un polymère vinylaromatique

$a_2$) 0,05 à 10% en poids, par rapport à A, de l'un au moins des composés suivants:

$a_{21}$) un monomère contenant des groupements amide et ayant une double liaison polymérisable,

$a_{22}$) un monomère contenant des groupements lactame et ayant une double liaison polymérisable,

$a_{23}$) un composé dicarbonylé $\alpha,\beta$-insaturé, et

$a_3$) 0 à 20% en poids, par rapport à A, d'un autre comonomère qui peut réagir avec $a_1$ dans les conditions de préparation,

et

B) de 0,1 à 20 parties en poids, par rapport à la somme des composants A et B,

- de poly-$\epsilon$-caprolactone ayant une moyenne en poids du poids moléculaire de 400 à 100 000 g/mole et/ou
- d'un polymère de structure

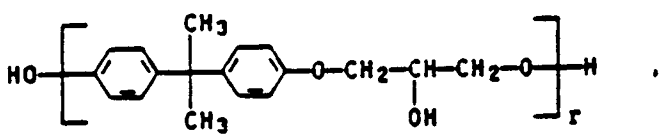

r étant choisi de sorte que la moyenne en poids du poids moléculaire se situe entre 400 et 100 000 g/mole,

la somme des composants A et B donnant 100 parties en poids.

**2.** Masses à mouler thermoplastiques selon la revendication 1, caractérisées en ce que le composant $a_{21}$, est un composé de formule générale I ou II

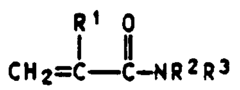

(I)

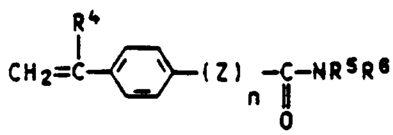

(II) ,

$R^1$, $R^2$, $R^3$, $R^4$, $R^5$ et $R^6$ représentant des atomes d'hydrogène, des groupements alkyle ou cycloalkyle renfermant jusqu'à 12 atomes de carbone ou des groupements aryle, Z représentant des groupements alkylène à 1-12 atomes de carbone et n ayant la valeur 0 ou 1.

**3.** Masses à mouler thermoplastiques selon la revendication 1 ou 2, caractérisées en ce que le composant $a_{22}$ est un composé de formule générale III

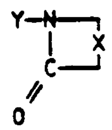

(III).

X représentant un groupement alkylène linéaire ou ramifié à 2-15 atomes de carbone et Y ayant la formule générale

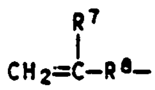

dans laquelle $R^7$ représente un atome d'hydrogène, un groupement alkyle ou alcoxy à 1-4 atomes de carbone et $R^8$ représente l'un des restes bivalents suivants

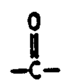

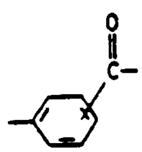

ou

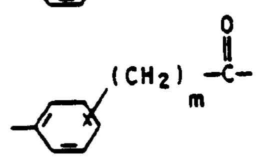

.

m étant un nombre entier de 1 à 4.

**4.** Masses à mouler thermoplastiques selon l'une quelconque des revendications 1 à 3, caractérisées en ce que le composant $a_{23}$ est un composé de formule générale IV

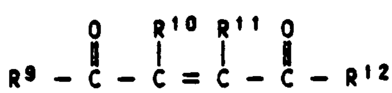

IV,

dans laquelle

| | |
|---|---|
| $R^9$ et $R^{12}$ | représentent des groupements hydroxy, des groupements aryloxy, alcoxy, aralcoxy ou cycloalcoxy renfermant jusqu'à 12 atomes de carbone, $-NR^{13}R^{14}$ ou, en commun, -O- ou $-NR^{13}-$, |
| $R^{10}$ et $R^{11}$ | représentent des atomes d'hydrogène ou, lorsque $R^{10}$ ou $R^{11}$ est un atome d'hydrogène, l'autre est un atome de chlore, un groupement alkyle ou cycloalkyle renfermant jusqu'à 12 atomes de carbone ou un groupement aryle, ou ils représentent en |

commun un groupement alkylène à 4 atomes de carbone,

$R^{13}$ et $R^{14}$ représentent des atomes d'hydrogène, des groupements alkyle, cycloalkyle, aralkyle ou aryle qui renferment jusqu'à 12 atomes de carbone et qui peuvent être substitués à leur tour par des groupements alkyle en $C_1$-$C_4$ ou par des groupements alcoxy.

**5.** Procédé de préparation des masses à mouler selon l'une quelconque des revendications 1 à 4 par mélange des composants A et B, caractérisé en ce qu'on procède à une température comprise entre 200 et 320 ° C pendant 0,5 à 30 mn.

**6.** Utilisation des masses à mouler thermoplastiques selon l'une quelconque des revendications 1 à 5 comme agents d'adhérence ou pour la fabrication de corps moulés par moulage par injection ou extrusion.